# EUROPÄISCHE PATENTSCHRIFT

(11) **EP 0 437 257 B1**
(45) Veröffentlichungstag und Bekanntmachung des Hinweises auf die Patenterteilung: **11.08.1993**
(21) Anmeldenummer: 91100252.5
(22) Anmeldetag: 09.01.1991
(51) Int. Cl.: B60J 1/17, E05F 15/16

(54) **Getriebeanordnung**
Transmission arrangement
Arrangement de transmission

(30) Priorität: 10.01.1990 DE 4000555
(43) Veröffentlichungstag der Anmeldung: 17.07.1991
(73) Patentinhaber: Mehnert, Walter, Dr., D-85521 Ottobrunn (DE)
(72) Erfinder: Mehnert, Walter, Dr., D-85521 Ottobrunn (DE)
(74) Vertreter: Strasser, Wolfgang, Dipl.-Phys

(56) Entgegenhaltungen:
- DE-A- 3 427 482
- DE-A- 3 832 927
- DE-C- 731 943
- FR-A- 2 111 220
- US-A- 4 167 834

## Beschreibung

Die Erfindung betrifft eine Getriebeanordnung der im Oberbegriff des Anspruches 1 niedergelegten Art.

Derartige Getriebeanordnungen finden insbesondere als Fensterhebevorrichtungen in Kraftfahrzeugen Verwendung, bei denen die Türen in Fahrtrichtung gesehen so nach außen konvex gekrümmt sind, daß die Fenster beim Öffnen bzw. Schließen auf einer der Türkrümmung folgenden gekrümmten Bahn bewegt werden müssen.

Zu diesem Zweck ist es bekannt, in der Tür einen feststehenden Elektromotor anzuordnen, der ein Zahnrad oder dergleichen antreibt, das in eine zylindrische Drahtspirale eingreift und diese bei seiner Drehung in Längsrichtung verschiebt. Die Drahtspirale, die quer zu ihrer Längsrichtung nur eine geringe Eigensteifigkeit besitzt, ist von einem in Längsrichtung geschlitzten Blechrohr so umschlossen, daß sie sich in diesem nur vor- und zurückbewegen kann. Das eine Ende der Drahtspirale ist mit dem zu bewegenden Fenster starr verbunden, wobei das diese beiden Teile miteinander verbindende Element durch den Schlitz des Blechrohrs hindurchgreift. Der Teil des Blechrohrs, in dem sich das mit dem Fenster verbundene Ende der Drahtspirale vor- und zurückbewegt, verläuft parallel zur Bewegungsbahn des Fensters.

Da durch eine solche Anordnung nur Zug- bzw. Schubkräfte in Längsrichtung des Blechrohres und der in ihm geführten Drahtspirale ausgeübt werden können, ist es erforderlich, zusätzliche Führungseinrichtungen vorzusehen, die Reibungsmomente und seitliche Kippmomente des zu bewegenden Körpers aufnehmen. Dies ist insbesondere dann, wenn aus Design-Gründen das Fenster nur an einer Seite geführt werden soll, schwierig.

Damit das Fenster nach dem Abschalten des Antriebsmotors in der jeweiligen Stellung stehen bleibt und nicht nach unten gedrückt werden kann, ist im allgemeinen das die Drahtspirale umschließende Blechrohr zusätzlich zu wenigstens einer Schleife gewickelt, um durch die Seilreibung zwischen Drahtspirale und Blechrohr eine vom Motor bzw. dem Eingriff des Motorzahnrades in die Drahtspirale unabhängige Selbsthemmwirkung zu erzielen. Diese Seilreibung muß aber bei jedem gewollten Hub- oder Absenkvorgang überwunden werden und führt daher zu einem zusätzlichen Energiebedarf.

Ein weiterer Nachteil der bekannten Anordnung besteht darin, daß das Blechrohr mindestens die doppelte Länge des vollen Hubweges des Fensters aufweisen muß, damit die Drahtspirale bei völlig abgesenktem Fenster weiterhin in dem Blechrohr geführt wird. Hieraus ergibt sich ein vergleichsweise großer Platzbedarf.

Demgegenüber liegt der Erfindung die Aufgabe zugrunde, eine Getriebeanordnung der eingangs genannten Art zu schaffen, die eine möglichst kleine Baugröße besitzt und es ermöglicht, den zu bewegenden Gegenstand ohne zusätzliche Führungsmittel längs der gekrümmten Bahn exakt zu führen und entsprechende Gegenmomente aufzunehmen.

Zur Lösung dieser Aufgabe sieht die Erfindung die im Anspruch 1 zusammengefaßten Merkmale vor.

Gemäß der Erfindung wird also nicht mehr ein bezüglich des zu bewegenden Gegenstandes feststehender Motor verwendet, der ein sich mit diesem Gegenstand mitbewegendes verschiebliches Element (die Drahtspirale) antreibt, das so flexibel ausgebildet ist, daß es sich zwar der gekrümmten Bahn anpassen dabei aber keine Führungsfunktion übernehmen kann. Stattdessen wird eine feststehende, entsprechend der gekrümmten Bewegungsbahn gekrümmte Spindel vorgesehen, an der sich der Motor aufgrund der Drehbewegung zwischen Rotor und Stator in Längsrichtung entlangbewegt. Unter einer gekrümmten Spindel wird dabei im vorliegenden Zusammenhang ein langgestreckter, gekrümmter Stab verstanden, der in jedem seiner zur Längsachse senkrechten Querschnitte im wesentlichen kreisförmig ausgebildet ist und auf dessen Mantelfläche wenigstens ein schraubenlinienförmiger Gewindegang vorgesehen ist, der sich zumindest über die Länge der von dem zu bewegenden Gegenstand zu durchlaufenden Bahn erstreckt. Die Ganghöhe, die Steigung, die Gangtiefe und die Querschnittsform des Gewindeganges können dabei innerhalb weiter Grenzen variieren. In jedem Fall erfährt das Gewindegegenstück und mit ihm die Motoranordnung und der zu bewegende Gegenstand durch die gekrümmte Spindel eine so gute Führung, daß auf zusätzliche Führungselemente weitgehend verzichtet werden kann. Da die Spindel nur unwesentlich länger sein muß, als die vom Gegenstand zu durchlaufende Bewegungsbahn, ergibt sich eine minimale Einbaugröße. Dies ermöglicht es auch bei beengten Raumverhältnissen in vielen Fällen, den zu führenden Gegenstand an der Spindel unterhalb seines Schwerpunktes oder in der Nähe dieses optimalen Abstützpunktes zu stützen, so daß gegenüber einer beim Stand der Technik sehr häufig erforderlichen exzentrischen Abstützung wesentlich geringere Kippmomente auftreten.

Ein weiterer Vorteil der erfindungsgemäßen Getriebeanordnung ergibt sich bei ihrer Verwendung als Fensterhebevorrichtung in der Tür eines Kraftfahrzeuges: Hier kann die Spindel nämlich so massiv ausgebildet und so fest mit den Rahmenteilen der Tür verbunden werden, daß sie als zusätzlicher Rammschutz für die Fahrzeuginsassen dient.

Besonders vorteilhaft erweist sich die Möglichkeit, das komplette Getriebe direkt an die Scheibe zu montieren, so daß dieses für jede Art von Kraftfahrzeug verwendbar wird, weil nur noch die Spindel an die jeweilige Krümmung anzupassen ist.

Sollen größere Kippmomente aufgenommen werden, weil eine Abstützung exakt unter dem Schwerpunkt des zu bewegenden Gegenstandes nicht möglich ist, so sind erfindungsgemäß zwei Gewindegegenstücke auf ein und dieselbe gekrümmte Spindel so aufgeschraubt, daß sie in Längsrichtung der Spindel voneinander einen Abstand aufweisen, der einen ausreichend großen Hebelarm liefert. Die beiden Gewindegegenstücke sind dann entweder direkt oder mittelbar so miteinander verbunden, daß sie sich in Längsrichtung der gekrümmten Spindel gleichsinnig und mit gleicher Geschwindigkeit bewegen.

Die direkte Verbindung der beiden Gewindegegenstücke erfolgt mit Hilfe einer die Spindel umgreifenden Hülse, die sich mit den Gewindegegenstücken mitdreht und vorzugsweise einen integralen Bestandteil des Rotors des Elektromotors bildet. Diese Hülse besitzt die Form eines geraden Kreiszylinders, dessen Achse den von der zentralen Linie der gekrümmten Spindel gebildeten Bogen als Sehne schneidet. In den beiden Schnittpunkten befinden sich die Drehzentren der beiden Gewindestücke.

Alternativ hierzu kann jedes der beiden Gewindestücke Bestandteil eines eigenen Motor-Rotors sein. In diesem Fall sind dann praktisch auf ein und derselben gekrümmten Spindel zwei Motoren angeordnet, deren Statoren miteinander und mit dem zu bewegenden Körper verbunden sind. Diese Verbindung kann ebenfalls durch eine die Spindel umgreifende Hülse erfolgen, die hier auch eine von der geraden Kreiszylinderform abweichende Gestalt besitzen kann.

Vorteilhafte Aus- und Weiterbildungen der erfindungsgemäßen Getriebeanordnung sind in den Unteransprüchen niedergelegt.

Die Erfindung wird im folgenden anhand von Ausführungsbeispielen unter Bezugnahme auf die Zeichnung beschrieben; in dieser zeigen:
- Fig. 1: eine in die Fensterhebe-Vorrichtung eines Kraftfahrzeuges integrierte erfindungsgemäße Getriebeanordnung mit zwei als Muttern ausgebildeten Gewindegegenstücken, die durch eine Hülse mit-einander verbunden sind,
- Fig. 2: eine Draufsicht in Richtung der Pfeile II-II auf die Vorrichtung der Fig. 1, wobei die Spindel der Deutlichkeit halber weggelassen ist,
- Fig. 3: ein Ausführungsbeispiel, bei dem zwei erfindungsgemäße Getriebeanordnungen, die durch zwei synchronisierte Motoren angetrieben werden, durch eine Hülse miteinander verbunden sind,
- Fig. 4: ein Ausführungsbeispiel, bei dem die Gewindegegenstücke von zwei flachen Scheiben gebildet werden, die durch eine Hülse miteinander verbunden sind, die gleichzeitig den Rotor der Motoranordnung bildet,
- Fig. 5: eine Teildraufsicht auf die Ausführungsform der Fig. 4 längs der Linie V-V, wobei der Deutlichkeit halber die Spindel weggelassen ist, und
- Fig. 6: den Eingriff des Gewindeganges der Spindel aus Fig. 4 in den Schlitz eines Gewindegegenstückes in zwei verschiedenen Winkelstellungen.

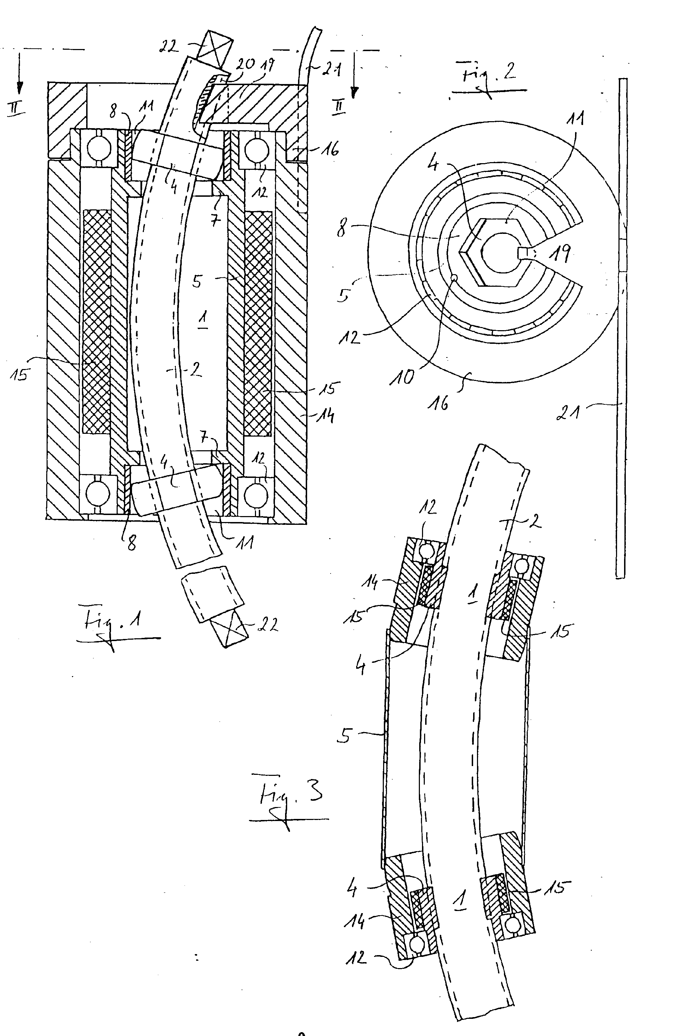

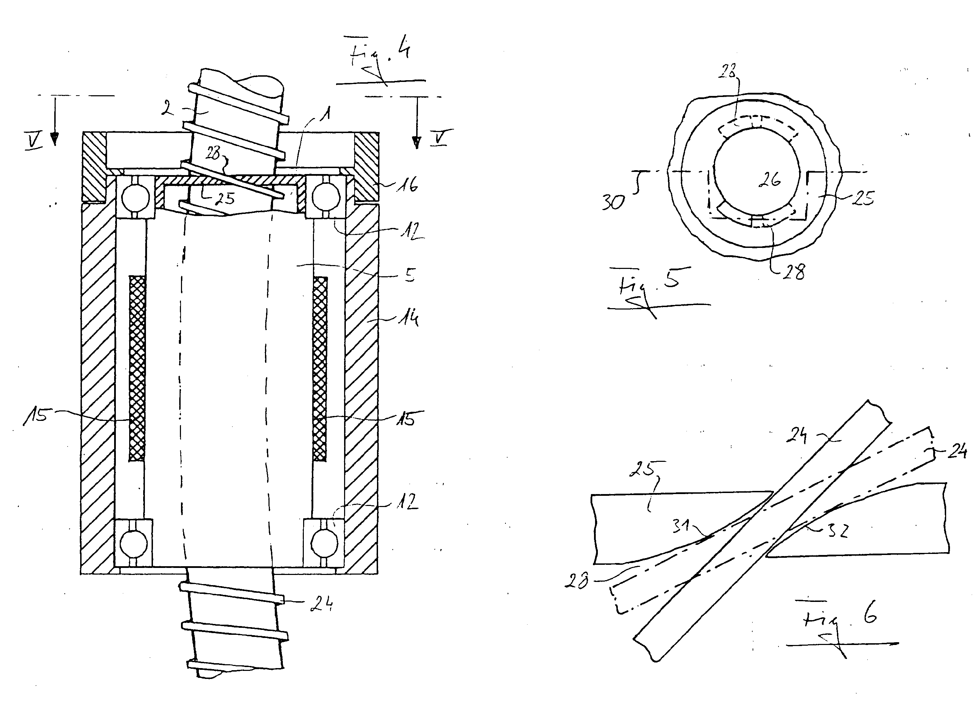

Die Getriebeanordnung 1 der Fig. 1 und 2 besteht im wesentlichen aus der Spindel 2, deren Krümmung der Deutlichkeit halber stark übertrieben dargestellt ist, und den beiden jeweils als Sechskant-Mutter 4 ausgebildeten Gewindegegenstücken, die im Abstand voneinander auf die Spindel 2 aufgeschraubt und durch eine lange Hülse 5 miteinander verbunden sind.

Zum Zwecke dieser Verbindung besitzt die in Form eines geraden Kreiszylinders ausgebildete Hülse 5 an ihrer Innenwand zwei radial nach innen vorspringende Schultern 7, von denen jede in der Nähe eines der beiden axialen Stirnenden der Hülse 5 so angeordnet ist, daß ihre zu diesem axialen Stirnende hinweisende Fläche vom Stirnende der Hülse 5 einen Abstand aufweist, der etwa gleich dem 1,5fachen der Dicke der Muttern 4 ist. Von jedem der axialen Stirnenden her ist in die Hülse 5 ein Verbindungsstück 8 eingeschoben, dessen Außenseite die Form eines geraden Kreiszylinders besitzt, der mit seiner äußeren Mantelfläche an der inneren Mantelfläche der Hülse 5 anliegt. Jedes der Verbindungsstücke 8 sitzt mit seiner inneren axialen Stirnfläche an der zugehörigen Schulter 7 der Hülse 5 auf und ist über einen in Fig. 2 sichtbaren Stift 10 mit der Hülse drehfest verbunden. Jedes der Verbindungsstücke 8 wird zentrisch von einer im Querschnitt sechseckigen, in axialer Richtung durchgehenden Öffnung 11 durchzogen. Die Abmessungen dieser durchgehenden Öffnung 11 sind auf die Außenmaße der Sechskantmutter 4 so abgestimmt, daß die Mutter durch das Verbindungsstück 8 drehfest mit der Hülse 5 verbunden ist. Wie man der Fig. 1 sehr deutlich entnimmt, muß jede der Sechskantmuttern 4 wegen der Krümmung der Spindel 2 in der durchgehenden Öffnung 11 des zugehörigen Verbindungsstückes 8 so angeordnet sein, daß sie gegen die Längs- bzw. Symmetrieachse der Hülse 5 verkippt ist. Dies führt dazu, daß jede der Sechskantmuttern 4 bei einer Drehung der Hülse 5 bezüglich dieser Hülse eine Taumelbewegung ausführt. Damit dies ohne große Reibungsverluste geschehen kann, sind die sich in Längsrichtung erstreckenden Außenflächen der Sechskantmuttern 4 ballig ausgebildet und ist der Querschnitt der durchgehenden Öffnung 11 genügend groß bemessen. Die Schultern 7 springen nach innen so weit vor, daß sich einerseits die Hülse 5 frei um die Spindel 2 drehen kann, und andererseits die Muttern 4 in axialer Richtung die zur Verschiebung der Anordnung erforderlichen Kräfte auf die Schultern 7 und damit die Hülse 5 übertragen können. Pro Mutter können auch zwei derartige Schultern vorgesehen sein, damit diese Druckkräfte in beiden Bewegungsrichtungen ausüben kann.

Über zwei im Bereich ihrer axialen Enden angeordnete Kugellager 12 ist die Hülse 5 an der inneren Mantelfläche eines sie koaxial umgebenden Motorgehäuses 14 abgestützt, das im wesentlichen ebenfalls die Form eines geraden Kreiszylinders besitzt, und bei längs der Spindel 2 erfolgenden Verschiebungen der Muttern 4 und der Hülse 5 mitgenommen wird. Das Motorgehäuse 14 umfaßt nicht näher dargestellte Statorwicklungen, die über ebenfalls nicht gezeigte Anschlüsse mit Strom versorgt werden können. Die durch den durch die Statorwicklungen fließenden Strom erzeugten magnetischen Drehfelder wirken auf an der Außenseite der Hülse 5 montierte Permanentmagneten 15 in bekannter Weise so ein, daß sich diese in Drehung versetzt. Die Hülse 5 bildet also in Verbindung mit diesen Permanentmagneten 15 den Rotor eines elektrischen Motors. An seinem in Fig. 1 oberen Stirnende ist auf das Motorgehäuse 14 ein Scheibenträger 16 aufgesetzt, der mit dem Motorgehäuse 14 drehfest verbunden ist und ebenfalls im wesentlichen die Form eines geraden Kreiszylinders besitzt. In axialer Richtung ist der Scheibenträger 16 von einer geraden Kreiszylinderöffnung 17 durchzogen, die einen ungehinderten Durchtritt der Spindel 2 ermöglicht. In radialer Richtung erstreckt sich ein mit dem Scheibenträger 16 einstückig verbundener Führungsvorsprung 19 so weit in die Kreiszylinderöffnung 17 hinein, daß er mit seinem radial inneren Ende in eine in der Spindel 2 ausgebildete Führungsnut 20 eingreift, die sich nahezu über die gesamte Länge der Spindel 2 erstreckt. Auf diese Weise wird der Scheibenträger 16 und damit auch das Motorgehäuse 14 an der Spindel 2 in deren Längsrichtung verschieblich drehfest geführt. Zur Verbesserung dieser Führungswirkung können mehrere solche Führungsvorsprünge vorgesehen sein, von denen jeder in eine zugehörige Führungsnut eingreift. Diese Führungsanordnung dient nur dazu, eine Drehung des Motorgehäuses 14 um die Spindel 2 zu verhindern. Die Führung des zu bewegenden Körpers längs der gekrümmten Bahn erfolgt durch die Bindung der gesamten Motoranordnung an die Spindel 2.

Am Scheibenträger 16 ist eine in den Fig. 1 und 2 nur teilweise wiedergegebene Fensterscheibe 21 eines Kraftfahrzeuges befestigt, die hier den zu bewegenden Körper bildet. Die an den Enden der Spindel 2 vorgesehenen Vierkante 22 dienen dazu, die Spindel 2 feststehend im Innenraum einer Kraftfahrzeugtür einzuspannen. Dabei ist die Krümmung der Spindel 2 an die Krümmung der jeweiligen Kraftfahrzeugtür so angepaßt, daß die Fensterscheibe 21 dieser Krümmung folgend vertikal verschoben wird, wenn der Motor mit Strom versorgt wird und sich die Hülse 5 und mit ihr die Verbindungsstücke 8 und die Sechskantmuttern 4 um die zentrale Symmetrieachse der Hülse 5 drehen.

Das Außengewinde der Spindel 2 und die Innengewinde der nur wenige Gewindegänge umfassenden Sechskantmuttern 4 sind so aufeinander abgestimmt, daß die unterschiedlichen Steighöhen, die der Gewindegang auf der dem Krümmungsmittelpunkt zugewandten Seite einerseits und der vom Krümmungsmittelpunkt abgewandten Seite andererseits besitzt, durch ein entsprechend großes Spiel aufgenommen werden kann. Dieses Gewindespiel kann allerdings sehr klein sein, da, wie bereits erwähnt, die Krümmung der Gewindespindel 2 in Wirklichkeit wesentlich kleiner ist, als dies die Figuren wiedergeben. Der Abstand der beiden Sechskantmuttern 4 und damit die Länge der Hülse 5 werden so gewählt, daß die beim Verschieben des Fensters 21 auftretenden Kippmomente gut aufgenommen werden können und es nicht zu einem Verkanten des Fensters kommt.

Das in Fig. 3 gezeigte Ausführungsbeispiel umfaßt zwei erfindungsgemäße Getriebeanordnungen 1, die dadurch gebildet sind, daß auf ein und dieselbe Spindel 2 zwei Muttern 4 aufgeschraubt sind, von denen jede einige wenige Gewindezüge umfaßt und an ihrer Außenseite in Form eines geraden Kreiszylinders ausgebildet ist. Jede der beiden Muttern 4 trägt auf ihrer Außenseite Permanentmagnete 15, und ist über ein Kugellager 12 in einem ebenfalls im wesentlichen als gerader Kreiszylinder ausgebildeten Motorgehäuse 14 abgestützt, dessen Wicklungen wieder nicht gesondert dargestellt sind. Somit bildet jede der Muttern 4 gemeinsam mit den auf ihr angebrachten Permanentmagneten 15 den Rotor eines Elektromotors, der sich gegenüber dem als Stator dienenden Motorgehäuse 14 dreht, wenn dessen Feldwicklungen mit Strom versorgt werden. Die beiden Getriebeanordnungen 1 weisen in Längsrichtung der gekrümmten Spindel 2 einen Abstand auf und sind durch eine Hülse 5 miteinander verbunden, die im vorliegenden Fall jedoch nicht drehbar ist sondern die beiden Statoren bzw. Motorgehäuse 14 miteinander verbindet. In den Bereichen, in denen die Motorgehäuse 14 in die Hülse 5 eingesteckt sind, sind die Mantelflächen der Motorgehäuse ballig ausgebildet, um eine Anpassung an unterschiedlich gekrümmte Spindeln 2 zu ermöglichen. Um eine synchrone Bewegung der beiden Getriebeanordnungen und ihrer zugehörigen Motoren zu ermöglichen, kann vorgesehen sein, daß die beiden Motoren von ein und demselben Strom durchflossen werden. Die gesamte Anordnung kann wieder drehfest an der feststehenden Spindel 2 geführt sein, wie dies bei dem Ausführungsbeispiel in Fig. 1 beschrieben wurde. Anstelle der geraden Hülse 5 kann hier auch eine entsprechend der Spindel 2 gekrümmte Hülse oder ein geeignetes Verbindungsgestänge oder dergleichen verwendet werden.

Sollen keine größeren Kippmomente aufgenommen werden, weil z.B. der zu verschiebende Körper genau unter seinem Schwerpunkt angestützt werden kann, so kann auch nur eine der beiden in Fig. 3 gezeigten Getriebeanordnungen unmittelbar mit dem zu führenden Körper verbunden sein und die Hülse 5 und die andere Getriebeanordnung weggelassen werden. Allerdings werden dann zwei Kraftübertragungsschultern benötigt.

Bei dem in den Fig. 4 bis 6 wiedergegebenen Ausführungsbeispiel besitzt die gekrümmte Spindel 2 einen Gewindegang 24 mit sehr großer Steighöhe. Dies ermöglicht es, die beiden Gewindegegenstücke, von denen in Fig. 4 nur das obere sichtbar ist, als flache Scheiben 25 auszubilden, die hier gleichzeitig die Stirn- bzw. axialen Endscheiben einer die Form eines geraden Kreiszylinders besitzenden langen Hülse 5 bilden. Jede der beiden flachen Scheiben 25 besitzt eine durchgehende, zentrale, kreisförmige Öffnung 26, deren Innendurchmesser etwas größer als der Außendurchmesser des Gewindekerns der Spindel 2 ist. Von dieser Öffnung 26 erstreckt sich radial nach außen ein Schlitz 28, der von der Seite gesehen schräg verlaufend die Unterseite der flachen Scheibe 25 mit deren Oberseite verbindet. Die Abmessungen des Schlitzes 28 und insbesondere seine radiale Tiefe sind so gewählt, daß der Gewindegang 24 in ihn eingreifen und durch ihn hindurch sich von der einen Seite der flachen Scheibe 25 zur anderen erstrecken kann. Wie man insbesondere der Fig. 5 entnimmt, ist der in dieser Figur oben dargestellte Schlitz 28 der in Fig. 4 unten liegenden flachen Scheibe 25 gegen den Schlitz 28 der in Fig. 4 oben befindlichen flachen Scheibe 25 um 180° versetzt. Dadurch wird erreicht, daß bei einer Drehung der Hülse 5, bei der die beiden Schlitze am Gewindegang 24 entlanglaufend sich um die Spindel 2 herumbewegen, der Abstand zwischen den beiden Scheiben 25 immer der gleiche bleiben kann. Die strichpunktierte Linie 30 in Fig. 5 gibt den Verlauf des Schnittes der Fig. 4 wieder.

Bei diesem Ausführungsbeispiel macht sich besonders stark bemerkbar, daß die Ganghöhe auf der dem Krümmungsmittelpunkt zugewandten Seite der gekrümmten Spindel 2 kleiner ist als auf der vom Krümmungsmittelpunkt abgewandten Seite. Dies hat zur Folge, daß der Gewindegang 24 auf der dem Krümmungsmittelpunkt zugewandten Seite wesentlich steiler verläuft als auf der gegenüberliegenden Seite, wie dies in Fig. 6 in stark übertriebener Weise wiedergegeben ist. In dieser Figur ist der Verlauf des Gewindeganges 24 auf der dem Krümmungsmittelpunkt zugewandten Seite mit durchgezogenen Linien und auf der vom Krümmungsmittelpunkt abgewandten Seite durch strichpunktierte Linien dargestellt. Man sieht, daß der Schlitz 28 in der flachen Scheibe 25 so mit abgerundeten Wänden 31, 32 ausgebildet ist, daß der Gewindegang 24 in beiden Extremstellungen durch den Schlitz 28 hindurchtreten kann und dabei an den Schlitzwänden 31, 32 eine ausreichende Führung erfährt. Die abgerundeten Wände 31, 32 sind in der zweiten Dimension ballig, damit die verschiedenen Neigungen des Gewindes auf der Innen- bzw. Außenseite der Spindel ohne Einfluß bleiben.

Im übrigen ist auch bei diesem Ausführungsbeispiel die Hülse 5 über zwei Kugellager 12 an einem die Form eines geraden Kreiszylinders besitzenden Motorgehäuse 14 abgestützt, das nicht dargestellte Statorwicklungen aufweist, die dann, wenn sie von Strom durchflossen werden, auf die Permanentmag-neten 15, die mit der Hülse 5 drehfest verbunden sind, eine die Hülse 5 in Drehung versetzende Kraft ausüben. Auch hier ist an der Oberseite des Motorgehäuses 14 ein dem Scheibenträger 16 entsprechender Kopf montiert, mit dem der zu bewegende Gegenstand verbunden werden kann. Weiterhin ist eine nicht dargestellte Führung vorgesehen, die eine Drehung des Motorgehäuses 14 und des Kopfes 16 um die gekrümmte Spindel 2 verhindert, eine Längsverschiebung dieser Teile aber ermöglicht.

## Patentansprüche

1. Getriebeanordnung zum Umsetzen der Drehbewegung eines Motors in eine längs einer gekrümmten Bahn verlaufende Linearbewegung eines angetriebenen Körpers, dadurch **gekennzeichnet**, daß sie folgende Bestandteile umfaßt:
- Eine entsprechend der Form der gekrümmten Bahn gekrümmte, feststehend angeordnete Spindel (2), und
- wenigstens ein mit dem Gewindegang (24) der gekrümmten Spindel (2) in Eingriff stehendes, um die Spindel (2) drehbares und aufgrund dieser Drehung in Längsrichtung der Spindel (2) verschiebbares Gewindegegenstück (4; 25),
wobei der Stator (14) des Motors mit dem angetriebenen Körper (21) verbunden und bezüglich der gekrümmten Spindel (2) längsverschieblich und drehfest gelagert und der Rotor (5, 15) des Motors mit dem Gewindegegenstück (4; 25) drehfest verbunden ist.

2. Getriebeanordnung nach Anspruch 1, dadurch **gekennzeichnet**, daß die Spindel (2) über ihre gesamte Länge gleichförmig gekrümmt ist.

3. Getriebeanordnung nach Anspruch 1 oder 2, dadurch **gekennzeichnet**, daß das Gewindegegenstück als nur wenige Ganghöhen umfassende Mutter (4) ausgebildet ist.

4. Getriebeanordnung nach Anspruch 3, dadurch **gekennzeichnet**, daß die Mutter (4) gleichzeitig den Rotor des Motors bildet. (Fig. 3).

5. Getriebeanordnung nach Anspruch 1 oder 2, dadurch **gekennzeichnet**, daß das Gewindegegenstück als Scheibe (25) ausgebildet ist, deren Dicke wesentlich kleiner als die Ganghöhe des Gewindes der Spindel (2) ist und die eine zentrale, die Spindel (2) umschließende Öffnung (26) aufweist, deren Innendurchmesser geringfügig größer als der Kerndurchmesser der Spindel (2) ist, und an die sich ein radialer, von der Unterseite der Scheibe (25) schräg zu deren Oberseite verlaufender Schlitz (28) anschließt, in den in jeder Stellung der Scheibe (25) ein kurzes Stück des Gewindeganges (24) der Spindel (2) eingreift. (Fig. 4).

6. Getriebeanordnung nach Anspruch 1, dadurch **gekennzeichnet**, daß zwei Gewindegegenstücke (4; 25) vorgesehen sind, die in Längsrichtung der Spindel (2) einen Abstand aufweisen und die durch eine die Spindel (2) umgreifende Hülse (5) miteinander verbunden sind.

7. Getriebeanordnung nach Anspruch 3 und 6, dadurch **gekennzeichnet**, daß die Hülse (5) den Rotor des Motors bildet und daß jede der beiden Muttern (4) mit der Hülse (5) drehfest so verbunden ist, daß sie gegen die Hülse (5) eine Kippbewegung ausführen kann (Fig. 1).

8. Getriebeanordnung nach Anspruch 4 und 6, dadurch **gekennzeichnet**, daß die Hülse (5) mit den beiden Statoren (14) der beiden Motoren verbunden ist und daß die beiden Motoren für eine synchrone Drehung der beiden Muttern (4) angesteuert werden.

9. Getriebeanordnung nach Anspruch 5 und 6, dadurch **gekennzeichnet**, daß die beiden Scheiben (25) mit der Hülse (5) drehfest so verbunden sind, daß ihre Schlitze (28) um 180° gegeneinander versetzt sind.

10. Getriebeanordnung nach einem der vorhergehenden Ansprüche, dadurch **gekennzeichnet**, daß der Stator (14) an der Spindel (2) drehfest geführt ist.

11. Getriebeanordnung nach einem der vorhergehenden Ansprüche, dadurch **gekennzeichnet**, daß der Stator (14) direkt mit dem zu bewegenden Körper (21) verbunden ist.

## Claims

1. A transmission arrangement for converting the rotary movement of a motor into a linear movement of a driven body, along a curved path, characterised in that it includes the following components:
- a stationarily arranged spindle (2) with is curved to correspond to the shape of the curved path, and
- at least one thread counterpart portion (4; 25) which is in engagement with the screwthread (24) of the curved spindle (2) and which is rotatable about the spindle (2) and by virtue of said rotation is displaceable in the longitudinal direction of the spindle (2),
wherein the stator (14) of the motor is connected to the driven body (21) and is mounted non-rotatably and longitudinally displaceably with respect to the curved spindle (2) and the rotor (5, 15) of the motor is non-rotatably connected to the thread counterpart portion (4; 25).

2. A transmission arrangement as set forth in claim 1 characterised in that the spindle (2) is uniformly curved over its entire length.

3. A transmission arrangement as set forth in claim 1 or claim 2 characterised in that the thread counterpart portion is in the form of a nut (4) comprising only a few thread pitches.

4. A transmission arrangement as set forth in claim 3 characterised in that the nut (4) forms at the same time the rotor of the motor (Figure 3).

5. A transmission arrangement as set forth in claim 1 of claim 2 characterised in that the thread counterpart portion is in the form of a disc (25), the thickness of which is substantially smaller than the thread pitch of the screwthread of the spindle (2) and which has a central opening (26) which embraces the spindle (2) and the inside diameter of which is slightly greater than the diameter of the core of the spindle (2) and which is adjoined by a radial slot (28), the slot extending from the underside of the disc (25) inclinedly to the top side thereof and a short portion of the thread flight (24) of the spindle (2) engaging into the slot (28) in any position of the disc (25) (Figure 4).

6. A transmission arrangement as set forth in claim 1 characterised in that there are provided two thread counterpart portions (4; 25) which are at a spacing in the longitudinal direction of the spindle (2) and which are connected together by a sleeve (5) which embrace the spindle (2).

7. A transmission arrangement as set forth in claims 3 and 6 characterised in that the sleeve (5) forms the rotor of the motor and that each of the two nuts (4) is non-rotatably connected to the sleeve (5) so that it can perform a tilting movement relative to the sleeve (5) (Figure 1).

8. A transmission arrangement as set forth in claim 4 and claim 6 characterised in that the sleeve (5) is connected to the two stators (14) of the two motors and that the two motors are actuated for synchronous rotary movement of the two nuts (4).

9. A transmission arrangement as set forth in claims 5 and 6 characterised in that the two discs (25) are non-rotatably connected to the sleeve (5) so that the slots (28) thereof are displaced through 180 ° relative to each other.

10. A transmission arrangement as set forth in one of the preceding claims characterised in that the stator (14) is non-rotatably guided on the spindle (2).

11. A transmission arrangement as set forth in one of the preceding claims characterised in that the stator ( 14 ) is directly connected to the body ( 21 ) to be moved.

## Revendications

1. Dispositif de transmission servant à convertir le mouvement de rotation d'un moteur en un déplacement linéaire, qui s'étend le long d'une trajectoire courbe, d'un corps entraîné, caractérisé en ce qu'il comprend les composants suivants :
- une broche fixe (2), qui est courbée d'une manière correspondant à la forme de la trajectoire courbe, et
- au moins un élément fileté antagoniste (4;25), qui engrène avec le filetage (24) de la broche courbe (2) et peut tourner autour de la broche (2) et peut être déplacé, sur la base de cette rotation, dans la direction longitudinale de la broche (2),
le stator (14) du moteur étant raccordé au corps entraîné (21) et étant monté de manière à être déplacé longitudinalement et bloqué en rotation par rapport à la broche courbe (2), tandis que le rotor (5,15) du moteur est raccordé avec blocage en rotation à l'élément fileté antagoniste (4;25).

2. Dispositif de transmission selon la revendication 1, caractérisé en ce que la broche (2) possède une forme courbe uniforme sur toute sa longueur.

3. Dispositif de transmission selon la revendication 1 ou 2, caractérisé en ce que l'élément antagoniste fileté est agencé sous la forme d'un écrou (4) comportant seulement un petit nombre de pas.

4. Dispositif de transmission selon la revendication 3, caractérisé en ce que l'écrou (4) constitue simultanément le rotor du moteur. (Figure 3).

5. Dispositif de transmission selon la revendication 1 ou 2, caractérisé en ce que l'élément antagoniste fileté est réalisé sous la forme d'un disque (25), dont l'épaisseur est sensiblement inférieure au pas du filetage de la broche (2) et qui possède une ouverture centrale (26), qui entoure la broche (2) et dont le diamètre intérieur est légèrement supérieur au diamètre du noyau de la broche (2), et auquel se raccorde une fente radiale (28), qui s'étend obliquement depuis la face inférieure du disque (25) jusqu'à sa face supérieure et dans laquelle s'engage, pour chaque position du disque (25), une courte partie du filetage (24) de la broche (2). (Figure 4).

6. Dispositif de transmission selon la revendication 1, caractérisé en ce qu'il est prévu deux éléments antagonistes filetés (4;25), qui sont distants l'un de l'autre dans la direction longitudinale de la broche (2) et sont reliés entre eux par une douille (5) enserrant la broche (2).

7. Dispositif de transmission selon les revendications 3 et 6, caractérisé en ce que la douille (5) forme le rotor du moteur et en ce que chacun des deux écrous (4) est raccordé avec blocage en rotation à la douille (5) de sorte qu'il peut exécuter un mouvement de basculement par rapport à la douille (5). (Figure 1).

8. Dispositif de transmission selon les revendications 4 et 6, caractérisé en ce que la douille (5) est raccordée aux deux stators (14) des deux moteurs et en ce que les deux moteurs sont commandés de manière à permettre une rotation synchrone des deux écrous (4).

9. Dispositif de transmission selon les revendications 5 et 6, caractérisé en ce que les deux disques (25) sont raccordés à la douille (5) avec blocage en rotation de sorte que leurs fentes (28) sont décalées réciproquement de 180°.

10. Dispositif de transmission selon l'une des revendications précédentes, caractérisé en ce que le stator (14) est guidé avec blocage en rotation sur la broche (2).

11. Dispositif de transmission selon l'une des revendications précédentes, caractérisé en ce que le stator (14) est raccordé directement au corps (21) devant être déplacé.
